# EUROPÄISCHE PATENTSCHRIFT

(11) **EP 3 202 615 B1**
(45) Veröffentlichungstag und Bekanntmachung des Hinweises auf die Patenterteilung: **24.06.2020**
(21) Anmeldenummer: 17153268.2
(22) Anmeldetag: 26.01.2017
(51) Int. Cl.: B60N 2/75

(54) **ARMLEHNENVORRICHTUNG**
ARMREST DEVICE
DISPOSITIF D'ACCOUDOIR

(30) Priorität: 03.02.2016 DE 102016101914
(43) Veröffentlichungstag der Anmeldung: 09.08.2017
(73) Patentinhaber: GRAMMER AG, 92224 Amberg (DE)
(72) Erfinder: Klieber, Daniel, 92224 Amberg (DE); Haller, Thomas, 92289 Ursensollen (DE); Meier, Johann, 92269 Fensterbach (DE)
(74) Vertreter: Hannke, Christian

(56) Entgegenhaltungen:
- EP-A2- 0 958 765
- WO-A2-2008/023181
- DE-A1-102014 005 620
- DE-T5-112008 002 079

## Beschreibung

Die Erfindung betrifft eine Armlehnenvorrichtung, insbesondere für Nutzfahrzeugsitze, mit einer Führungsschieneneinrichtung zum Führen einer Verschiebebewegung einer ersten Schiene relativ zu einer mit der Armlehnenvorrichtung verbindbaren zweiten Schiene in einer Verstellrichtung, wobei die Verschiebebewegung der ersten Schiene arretierbar ist durch ein Eingreifen eines Arretierungselementes einer Arretierungsvorrichtung in mindestens eine Ausnehmung der ersten Schiene.

Aus dem Stand der Technik sind derartige Armlehnenvorrichtungen bekannt, wobei mittels einer Führungsschieneneinrichtung beispielsweise ein Armlehnenpolsterteil, auf welchen der Arm des Fahrzeugführers abgelegt werden kann und entsprechende Bedienelemente angeordnet sind, verschiebbar gelagert ist. Da es im Betrieb störend sein kann, dass die Armlehne dauerhaft verschiebbar ist, ist es vorteilhaft, die Verschiebebewegung zu unterbinden.

Dazu ist eine Arretierungsvorrichtung vorgesehen, mittels welcher die Verschiebebewegung arretiert werden kann. Es handelt sich dabei um schwenkbare Hebel, die seitlich in die Führungsschieneneinrichtung in entsprechende Ausnehmungen eingreifen können und so die Verschiebebewegung arretieren können. Allerdings wird durch die seitliche Anordnung der seitliche Platzbedarf für die Arretierungsvorrichtung deutlich erhöht und kann dabei störend wirken bei einer Bedienung von Bedienelementen, die seitlich des Fahrzeugsitzes angeordnet sind.

DE 11 2008 002079 T5 zeigt ein Eingriffselement, das durch Betätigen einer Bedientaste aktiviert wird, wobei das Eingriffselement so konfiguriert ist, dass es aus den jeweiligen Positionierungsaussparungen herausragt und in diese zurückgezogen wird, wodurch die Positionseinstellung eines Deckels erleichtert und eine hohe Positionshaltekraft für den Deckel bei normalem Gebrauch gesichert wird. Weiter ist eine Arretierungsvorrichtung zu erkennen, bestehend aus mehreren Bauelementen.

Es ist demzufolge Aufgabe der vorliegenden Erfindung, eine Armlehnenvorrichtung mit einer platzsparenden und einfach zu bedienenden Arretierungsvorrichtung bereitzustellen.

Diese Aufgabe wird gemäß Patentanspruch 1 gelöst. Vorteilhafte Ausgestaltungen der Erfindung finden sich in den abhängigen Patentansprüchen.

Kerngedanke der Erfindung ist es, eine Armlehnenvorrichtung, insbesondere für Nutzfahrzeugsitze, mit einer Führungsschieneneinrichtung zum Führen einer Verschiebebewegung einer ersten Schiene relativ zu einer mit der Armlehnenvorrichtung verbindbaren zweiten Schiene in einer Verstellrichtung, bereitzustellen, wobei die Verschiebebewegung der ersten Schiene arretierbar ist durch ein Eingreifen eines Arretierungselementes einer Arretierungsvorrichtung in mindestens eine Ausnehmung der ersten Schiene, wobei die Arretierungsvorrichtung mit einem ersten Ende starr mit der Armlehnenvorrichtung verbunden und mit einem zweiten Ende in einer Höhenrichtung auslenkbar ist, wobei in einer nicht-ausgelenkten Stellung der Arretierungsvorrichtung das Arretierungselement in die Ausnehmung eingreift.

Das erste Ende der Arretierungsvorrichtung ist mittels der starren Verbindung vorzugsweise ortsfest in Bezug auf die Armlehnenvorrichtung angeordnet, wobei eine starre Verbindung vorteilhaft mittels einer Nietenverbindung, einer Schraubverbindung oder einer anderen Verbindungsmethode realisierbar ist.

Das zweite Ende der Arretierungsvorrichtung hingegen steht dabei höchstens in einem lösbaren Kontakt mit der Armlehnenvorrichtung und kann daher zumindest in einer Höhenrichtung ausgelenkt werden.

Unter einer Höhenrichtung wird vorzugsweise eine Richtung senkrecht zu der Verstellrichtung verstanden. Unter der Verstellrichtung ist dabei die Richtung zu verstehen, in welche die erste Schiene verschiebbar bzw. verlagerbar ist.

Erfindungsgemäß ist vorgesehen, dass das Arretierungselement der Arretierungsvorrichtung in einer nicht-ausgelenkten Stellung in die Ausnehmung eingreift, um die Verschiebebewegung der ersten Schiene relativ zu der zweiten Schiene zu arretieren. Befindet sich hingegen die Arretierungsvorrichtung in einer ausgelenkten Stellung, so greift das Arretierungselement nicht mehr in die Ausnehmung der ersten Schiene ein. Es ist hierbei jedoch zu beachten, dass unter einer ausgelenkten Stellung zu verstehen ist, dass das Arretierungselement nicht mehr in die Ausnehmung eingreift. Wird nämlich die Arretierungsvorrichtung durch Auslenken des zweiten Endes von einer nicht-ausgelenkten in eine ausgelenkte Stellung überführt, so greift das Arretierungselement zumindest teilweise weiterhin in die Ausnehmung ein, so dass weiterhin eine Arretierung der Verschiebebewegung vorliegt.

Gemäß einer bevorzugten Ausführungsform kann insbesondere das zweite Ende der Arretierungsvorrichtung leichter ausgelenkt werden, wenn die Arretierungsvorrichtung länglich ausgebildet ist. Vorteilhaft erstreckt sich dabei die länglich ausgestaltete Arretierungsvorrichtung in Richtung der Verstellrichtung.

Unter einer länglichen Ausgestaltung ist hierbei zu verstehen, dass die Längsausdehnung der Arretierungsvorrichtung groß ist gegenüber der Höhenausdehnung und der Breitenausdehnung der Arretierungsvorrichtung. Es ist daher möglich, mittels der länglichen Ausbildung der Arretierungsvorrichtung das zweite Ende der Arretierungsvorrichtung leichter auszulenken. Durch Erstreckung in Verstellrichtung kann dabei die benötigte Kraft zur Auslenkung reduziert werden.

Gemäß einer bevorzugten Ausführungsform kann die Arretierungsvorrichtung konstruktiv vereinfacht werden, wenn die Arretierungsvorrichtung zumindest teilweise elastisch verformbar ausgestaltet ist.

Eine elastische Verformung ist dabei besonders in Höhenrichtung erwünscht. Durch eine elastische Verformung der Arretierungsvorrichtung ist daher die Arretierungsvorrichtung selbstrückstellend ausgebildet, so dass nach erfolgter Auslenkung der Arretierungsvorrichtung mittels Auslenkung des zweiten Endes die Arretierungsvorrichtung selbstständig und automatisch wieder in den nicht-ausgelenkten Zustand zurückgeführt werden kann.

Gemäß einer bevorzugten Ausführungsform ist dabei vorteilhaft, wenn die Arretierungsvorrichtung zumindest teilweise aus einem Federbleich und/oder einem Federstahl besteht. Besonders vorteilhaft besteht das Arretierungselement der Arretierungsvorrichtung aus einem Material, welches starr oder steif ist.

Durch die zumindest teilweise Ausgestaltung der Arretierungsvorrichtung mit einem Federblech und/oder einem Federstahl kann die Arretierungsvorrichtung elastisch verformbar ausgestaltet werden bei gleichzeitiger Minimierung der Herstellungskosten durch Material- und Bauteileinsparung.

Gemäß einer weiter bevorzugten Ausführungsform ist die Arretierungsvorrichtung zumindest teilweise in Höhenrichtung gesehen unterhalb der zweiten Schiene angeordnet.

Durch eine derartige Anordnung der Arretierungsvorrichtung unterhalb der zweiten Schiene kann der Platzbedarf der Arretierungsvorrichtung weiter verringert werden. Vorteilhaft ist es auch denkbar, dass die Arretierungsvorrichtung auch unterhalb einer oberen Fläche der Armlehnenvorrichtung angeordnet ist. Die zweite Schiene ist dabei oberhalb der der oberen Fläche angeordnet.

Weiter bevorzugt weist zumindest die zweite Schiene mindestens eine Aussparung auf, durch welche das Arretierungselement hindurchragt, um in die Ausnehmung der ersten Schiene eingreifen zu können.

Sollte die Arretierungsvorrichtung auch unterhalb der oberen Fläche der Armlehnenvorrichtung angeordnet sein, so weist auch die obere Fläche der Armlehnenvorrichtung eine Aussparung auf, durch welche das Arretierungselement hindurchragt.

Im Allgemeinen weisen derartige Führungsschieneneinrichtungen auch Anschlagelemente auf, wobei beispielsweise die zweite Schiene mindestens ein unteres Anschlagelement und die erste Schiene mindestens ein oberes Anschlagelement aufweist, welche miteinander wechselwirken können, um so die Verschiebebewegung in der Verstellrichtung zu begrenzen und die Führungsschieneneinrichtung zu sichern.

Gemäß einer bevorzugten Ausführungsform ist an einem Rand der Aussparung mindestens ein unteres Anschlagelement der zweiten Schiene angeordnet, welches mit dem mindestens einem oberen Anschlagselement der ersten Schiene wechselwirkt. Vorteilhaft sind das mindestens eine untere und das mindestens eine obere Anschlagelement entlang der Verstellrichtung angeordnet.

Durch eine derartige Anordnung der unteren Anschlagselemente wird die Verschiebebewegung in keiner Weise durch das Arretierungselement gestört oder gehindert.

Gemäß einer weiter bevorzugten Ausführungsform ist das zweite Ende der Arretierungsvorrichtung besonders vorteilhaft auslenkbar, wenn ein Bowdenzug mit dem zweiten Ende der Arretierungsvorrichtung verbindbar ist, um mittels einer Betätigung des Bowdenzuges das zweite Ende und entsprechend die Arretierungsvorrichtung auszulenken.

Durch einen Bowdenzug ist es besonders gut möglich, Zugkräfte zu übertragen. Bei Betätigung des Bowdenzuges ist daher das zweite Ende besonders leichtgängig auslenkbar. Der Bowdenzug kann dabei auf bereits bekannte Art und Weise betätigt werden.

Das Arretierungselement kann gemäß einer bevorzugten Ausführungsform gut in die Ausnehmung der ersten Schiene eingreifen, wenn sich das Arretierungselement im Wesentlichen in Höhenrichtung erstreckt.

Die Arretierung der Verschiebebewegung durch das Eingreifen des Arretierungselements in eine Ausnehmung kann weiter verbessert werden, wenn gemäß einer bevorzugten Ausführungsform das Arretierungselement an einem ersten Ende mindestens eine nach außen hin in Höhenrichtung abfallende Fläche aufweist.

Bevorzugter weist das Arretierungselement an einem ersten Ende mindestens zwei nach außen hin in Höhenrichtung abfallende Flächen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: eine an einem Fahrzeugsitz montierte Armlehnenvorrichtung in einer perspektivischen Ansicht;
- Fig. 1B: die Armlehnenvorrichtung nach Fig. 1A in einer Seitenansicht;
- Fig. 1C: die Armlehnenvorrichtung nach Fig. 1A in einer Vorderansicht;
- Fig. 2: eine Arretierungsvorrichtung mit einem Arretierungselement;
- Fig. 3A: die Armlehnenvorrichtung mit einer Arretierungsvorrichtung in einer nichtausgelenkten Stellung;
- Fig. 3B: die Armlehnenvorrichtung mit einer Arretierungsvorrichtung in einer ausgelenkten Stellung;
- Fig. 4A: die Armlehnenvorrichtung nach Fig. 3A mit einer in Verstellrichtung verlagerten ersten Schiene;
- Fig. 4B: die Armlehnenvorrichtung nach Fig. 3B mit einer in Verstellrichtung verlagerten ersten Schiene;
- Fig. 5A: die Armlehnenvorrichtung in einer perspektischen Draufsicht;
- Fig. 5B: die Armlehnenvorrichtung nach Fig. 5A mit einer in Verstellrichtung verlagerten ersten Schiene;
- Fig. 6: die Armlehnenvorrichtung gemäß Fig. 5B in einer perspektivischen Unteransicht.

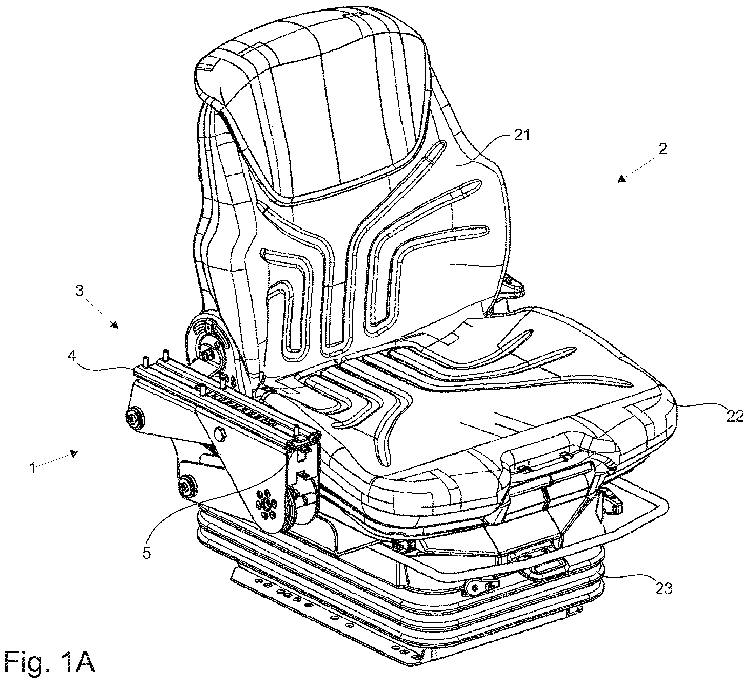

Die Figuren 1A bis 1C zeigen eine Armlehnenvorrichtung 1, welche an einem Fahrzeugsitz 2, insbesondere einem Nutzfahrzeugsitz 2, angeordnet ist. Der Fahrzeugsitz 2 umfasst dabei eine Rückenlehne 21, ein Sitzteil 22 und einen Sitzunterbau 23, welcher zur Federung und zur Verlagerung des Sitzteils 22 geeignet ist.

Die Figur 1A zeigt dabei die Anordnung in einer perspektivischen Ansicht. Die Armlehne 1 ist, wie im Nutzkraftfahrzeugbereich üblich, seitlich des Sitzteils 22 und seitlich der Rückenlehne 21 angeordnet.

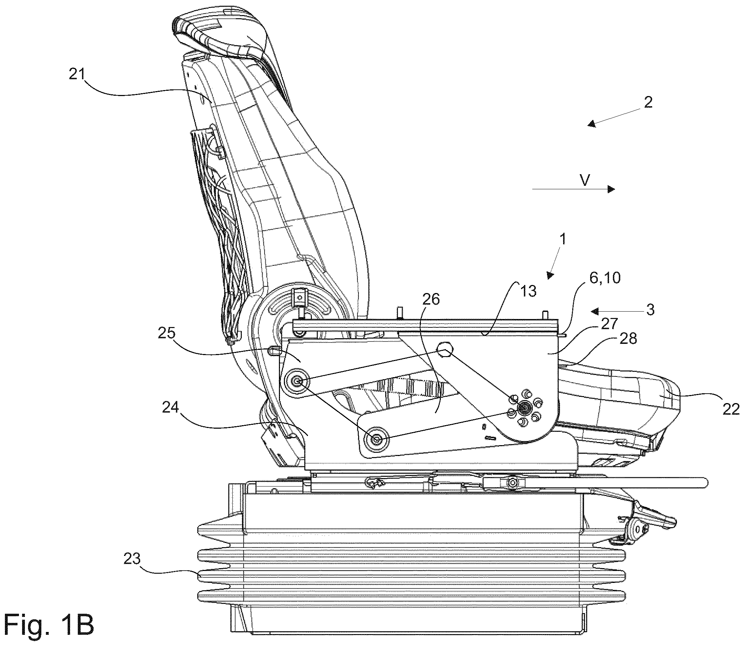

Die Figur 1B zeigt den Fahrzeugsitz der Figur 1A in einer Seitenansicht. Wie zu erkennen ist, ist die Armlehnenvorrichtung 1 mittels einer Armlehnenbefestigung 24 mit dem Fahrzeugsitz 2 verbindbar. Die Armlehnenvorrichtung 1 umfasst dabei eine erste Schwinge 25, eine zweite Schwinge und einen Armlehnenträger 27, welcher sowohl mit der ersten Schwinge 25 als auch der zweiten Schwinge 26 verbunden ist und ein Parallelogramm ausbilden, so dass bei einer Höhenverstellung der Armlehnenvorrichtung 1 die obere Fläche 13 des Armlehnenträgers 27 weiterhin parallel zu einem Karosserieboden (hier nicht gezeigt) ausgerichtet ist.

Weiter ist aus der Figur 1B erkennbar, dass sich die Arretierungsvorrichtung 6 mit seinem zweiten Ende 10 in der Verstellrichtung V weiter erstreckt als die obere Fläche 13. Hierdurch kann die Auslenkung des zweiten Endes 10 leichter erfolgen und somit auch die Auslenkung der Arretierungsvorrichtung 6, um die Arretierungsvorrichtung aus einer nicht-ausgelenkten Stellung 11 in eine ausgelenkte Stellung 12 zu verlagern. Es ist hierbei beispielsweise denkbar, das zweite Ende 10 händisch auszulenken. Auch kann so ein Bowdenzug 15 (hier nicht gezeigt) besser mit dem zweiten Ende 10 verbunden werden. Sollte ein Bowdenzug 15 vorgesehen sein, so ist es vorteilhaft, eine Bowdenzugführung 28 vorzusehen, um den Bowdenzug 15 in seiner Bewegungsfreiheit einzuschränken und so zu verhindern, dass der Bowdenzug 15 durch andere Baukomponenten beschädigt wird. Eine detaillierte Ansicht der Bowdenzugführung 28 ist den nachfolgenden Figuren zu entnehmen.

Weiter ist zu erkennen, dass auf der oberen Fläche 13 des Armlehnenträgers 27 die Führungsschieneneinrichtung 3 angeordnet ist. Die Führungsschieneneinrichtung 3 wird bei einer Höhenverstellung des Armlehnenträgers ebenso parallel verschoben und ist weiterhin parallel ausgerichtet.

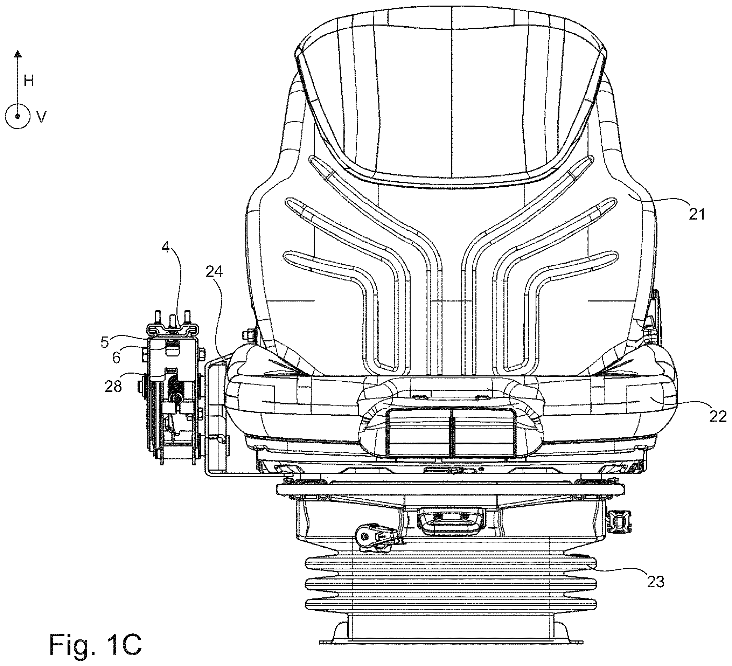

Die Figur 1C zeigt den Fahrzeugsitz der Figur 1A und 1B in einer Vorderansicht.

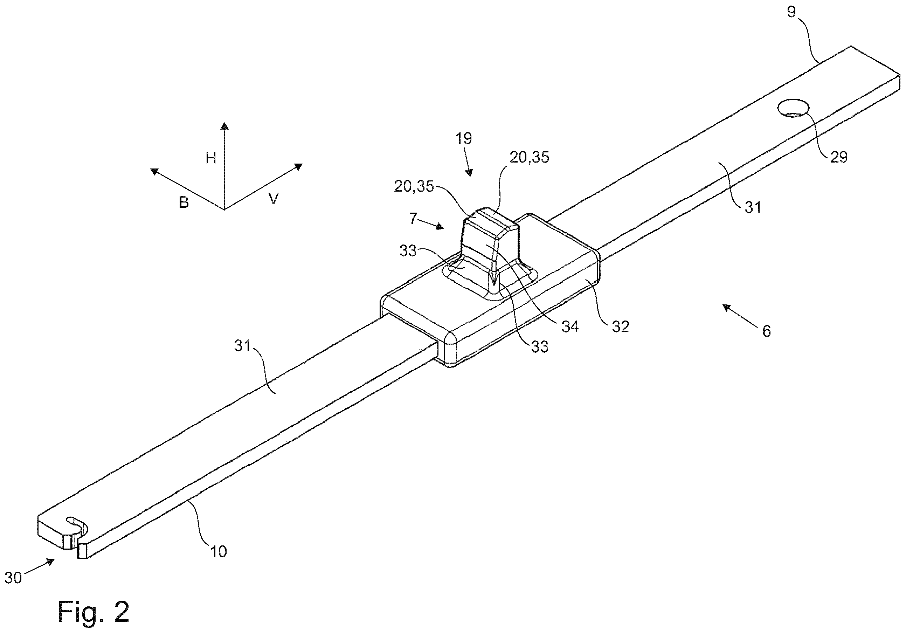

Die Figur 2 zeigt eine bevorzugte Ausführungsform der Arretierungsvorrichtung 6. Wie zu erkennen ist, ist die Arretierungsvorrichtung 6 länglich ausgestaltet und erstreckt sich in die Verstellrichtung V. An dem ersten Ende 9 ist ein Loch 29 bzw. ein Durchgang 29 angeordnet, mittels welchem die Arretierungsvorrichtung 6 durch eine Nietenverbindung oder eine Schraubverbindung mit der oberen Fläche 13 und/oder der zweiten Schiene 5 starr verbindbar ist. An dem ersten Ende ist eine Bowdenzugausnehmung 30 angeordnet, in welche der Bowdenzug 15 (hier nicht gezeigt) eingehängt werden kann und so mit dem zweiten Ende 10 verbunden werden kann.

Die Arretierungsvorrichtung 6 ist hierbei zumindest teilweise als ein Federblech und/oder Federstahl 31, abhängig von der Dimensionierung der Arretierungsvorrichtung 6, ausgebildet. Eine bevorzugte Ausgestaltung der Arretierungsvorrichtung 6 ist den nachfolgenden Figuren zu entnehmen.

Weiter umfasst die Arretierungsvorrichtung 6 ein Arretierungselement 7, welches sich im Wesentlichen in Höhenrichtung erstreckt und senkrecht zu der Verstellrichtung V verlaufend angeordnet ist. Vorliegend ist das Arretierungselement 7 mittels eines Arretierungselementeträgers 32 mit der Arretierungsvorrichtung 6 verbunden. Die Ausgestaltung des Trägers 32 ist dabei quaderartig, wobei die Federbleche 31 mit dem Träger 32 verbunden sind. Der Träger 32 kann jedoch auch als ein Teil des Arretierungselementes 7 angesehen werden, wenn der Träger 32 und das Arretierungselement 7 aus einem Materialstück gefertigt sind.

Weiter ist zu erkennen, dass an einem ersten Ende 19 das Arretierungselement 6 zwei nach außen hin, in Verstellrichtung gesehen, abfallende Flächen 20 aufweist. Das erste Ende 19 ist vorliegend in Höhenrichtung H gesehen das obere Ende 19 des Arretierungselements 7. Die Flächen 20 können dabei als Fasen 35 des Arretierungselements 7 entstanden sein. Vorteilhaft sind die Flächen 20 an ihren Randlinien bzw. Randflächen abgerundet ausgestaltet, um eine Verletzungsgefahr zu minimieren. Durch die abfallenden Flächen 20 ist es leichter, dass das Arretierungselement 7 in die Ausnehmung 8 (hier nicht gezeigt) eingreifen kann, da das Arretierungselement 7 in die Ausnehmung 8 durch die Flächen 20 in die Ausnehmung 8 hineingleiten kann.

Weiter weist das Arretierungselement 7 Verbreiterungsabschnitte 33, 34 auf, die den Querschnitt, welcher in einer Ebene aufgespannt durch die Verstellrichtung V und eine Breitenrichtung B liegt, in Höhenrichtung H gesehen nach unten hin vergrößern. Das Arretierungselement 7 gleitet daher so lange in die Ausnehmung 8 hinein, bis die Querschnittsfläche des Arretierungselements 7 im Wesentlichen der Fläche der Ausnehmung 8 entspricht, wodurch eine sichere Arretierung der Verschiebebewegung gewährleistet werden kann.

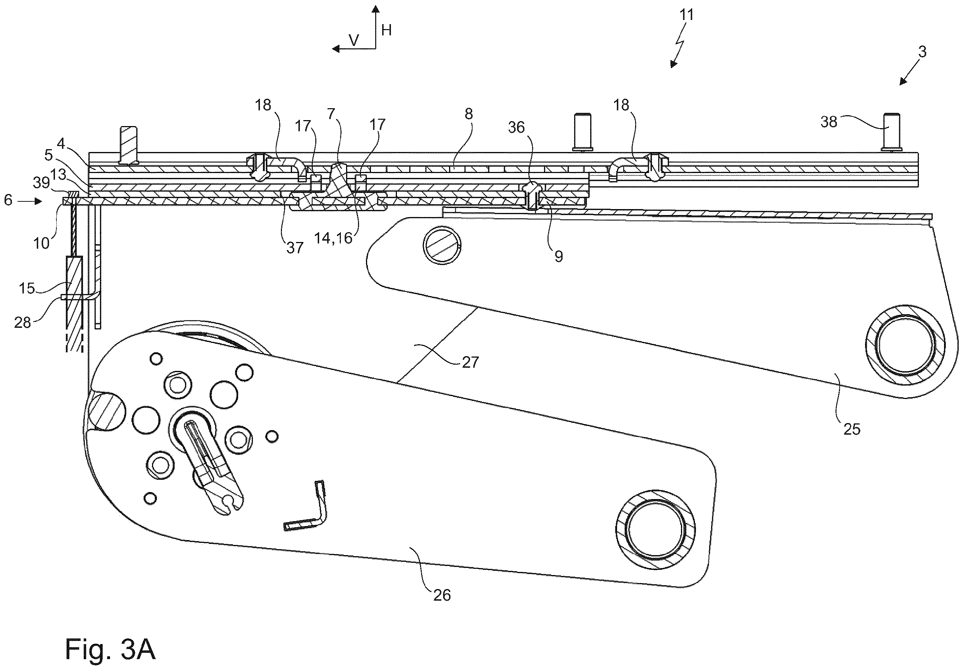

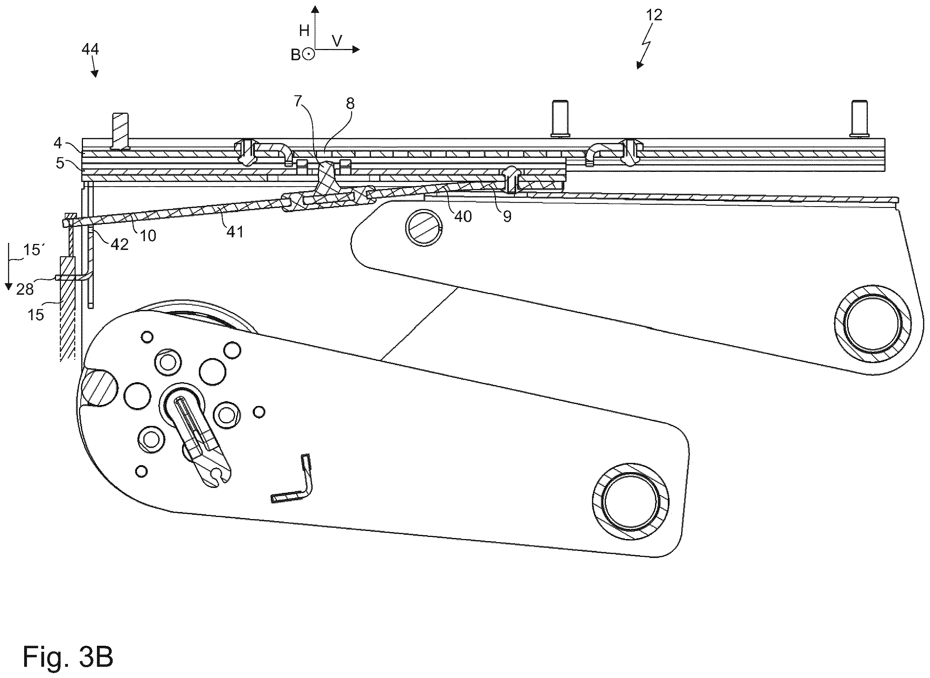

Die Figuren 3A und 3B zeigen die Armlehnenvorrichtung 1 in einer vergrößerten Seitenansicht, wobei die Figur 3A die Arretierungsvorrichtung 6 in einer nicht-ausgelenkten Stellung 11 und die Figur 3B die Arretierungsvorrichtung 6 in einer ausgelenkten Stellung 12 zeigt.

Die Arretierungsvorrichtung 6 ist hierbei in Höhenrichtung H gesehen unterhalb der oberen Fläche 13 und der zweiten Schiene 5 angeordnet. Es ist daher nötig, dass die zweite Schiene eine erste Aussparung 14 und die obere Fläche 13 eine zweite Aussparung 37 aufweisen, durch welche das Arretierungselement 7 hindurchragen kann, um in eine der Ausnehmungen 8 eingreifen zu können. Die Arretierungsvorrichtung 6 ist dabei mit einem ersten Ende 9 mittels einer Nietenverbindung 36 mit der oberen Fläche 13 verbunden. Es ist auch denkbar, dass die Nietenverbindung 36 auch dafür vorgesehen ist, die zweite Schiene 5 mit der oberen Fläche 13 als auch der Arretierungsvorrichtung 6 zu verbinden.

Darüber hinaus weist die Führungsschieneneinrichtung 3 eine relativ zu der zweiten Schiene 5 entlang der Verstellrichtung V verlagerbare erste Schiene 4 auf, wobei die erste Schiene obere Anschlagelemente 18 und die zweite Schiene untere Anschlagelemente 17 aufweist, die gegenseitig wechselwirken können und so erste Schiene 4 gegenüber der zweiten Schiene 5 sichern und so verhindern, dass die erste Schiene 4 sich von der zweiten Schiene 5 vollständig ablöst.

Die unteren Anschlagelemente 17 sind dabei an einem Rand 16 der ersten Aussparung 14 angeordnet, so dass die Verschiebebewegung in keiner Weise durch das Arretierungselement 7 beeinflusst werden kann, insbesondere wenn die Arretierungsvorrichtung 6 ausgelenkt ist. Vorteilhaft ist dabei die erste Aussparung derart angeordnet, dass sie in Verstellrichtung V gesehen mittig der zweiten Schiene 5 angeordnet ist. Hierdurch wird eine gleiche Verstelllänge der ersten Schiene in Verstellrichtung V nach vorne und nach hinten gewährleistet.

Weiter ist ein Bowdenzug 15 zu erkennen, welcher mit dem zweiten Ende 10 der Arretierungsvorrichtung 6 sowie einer Bowdenzugführung 28 verbunden ist. Vorteilhafterweise ist die Größe der Bowdenzugführung 28 so groß wie die Ummantelung des Bowdenzuges 15, so dass der Bowdenzug 15 gut durch die Bowdenzugführung 28 gehalten wird. Die Bowdenzugführung 28 ist daher gleichbedeutend mit einer Bowdenzughalterung 28. Der Bowdenzug 15 ist hierbei wie aus dem Stand der Technik bekannt aufgebaut. Vorliegend umfasst beispielsweise der Bowdenzug 15 an zumindest dem Ende, welches mit dem zweiten Ende 10 der Arretierungsrichtung 6 verbindbar ist, einen Tonnennippel 39.

Wie weiter zu erkennen ist, durchragt das Arretierungselement 7 sowohl die erste Aussparung 14 der zweiten Schiene 5 als auch die zweite Aussparung 37 der oberen Fläche 13, um so in die Ausnehmung 8 eingreifen zu können.

Die Figur 3B zeigt dabei die Armlehnenvorrichtung 1 in einer ausgelenkten Stellung 12. Mittels Betätigung des Bowdenzuges 15, angedeutet durch den Pfeil 15', wird das zweite Ende 10 der Arretierungsvorrichtung in Höhenrichtung H ausgelenkt, wobei das Arretierungselement 7 nicht mehr in die Ausnehmung 8 eingreift. In der ausgelenkten Stellung 12 der Arretierungsvorrichtung 6 ist es daher möglich, die erste Schiene 4 gegenüber der zweiten Schiene 5 in Verstellrichtung V nach hinten oder nach vorne zu verlagern.

Wie insbesondere der Figur 3B zu entnehmen ist, ist die Arretierungsvorrichtung 6 zumindest teilweise elastisch verformbar ausgebildet, insbesondere im Bereich des ersten Endes 9. Die Arretierungsvorrichtung 6 kann dabei mehrteilig, wie vorliegend, ausgestaltet sein und ein erstes Element 40 und ein zweites Element 41 aufweisen, wobei zumindest das erste Element 40 als Federblech und/oder Federstahl besteht.

Durch Auslenkung des zweiten Endes 10 in Höhenrichtung H wird dabei zumindest das erste Element 40 elastisch verformt. Wird der Bowdenzug 15 nicht mehr betätigt, so nimmt das erste Element 40 wieder seine ursprüngliche Form an und bring somit die Arretierungsvorrichtung 6 wieder in die nicht-ausgelenkte Stellung 11. Es kann ein Endanschlag 42 vorgesehen sein, welcher die Auslenkung des zweiten Endes 10 der Arretierungsvorrichtung 6 begrenzt, um Schäden an der Arretierungsvorrichtung 6 zu vermeiden.

Vorteilhafterweise ist ein Blechelement 43 vorgesehen, welches den Endanschlag 42 sowie die Bowdenzughalterung 28 umfasst, wobei das Blechelement 43 vorzugsweise in einer Ebene liegt, welche durch die Höhenrichtung H sowie der Breitenrichtung B gebildet ist. Weiter vorteilhaft ist das Blechelement 43 gesehen in der Verstellrichtung V in einem vorderen Bereich 44 der Armlehnenvorrichtung 1 angeordnet.

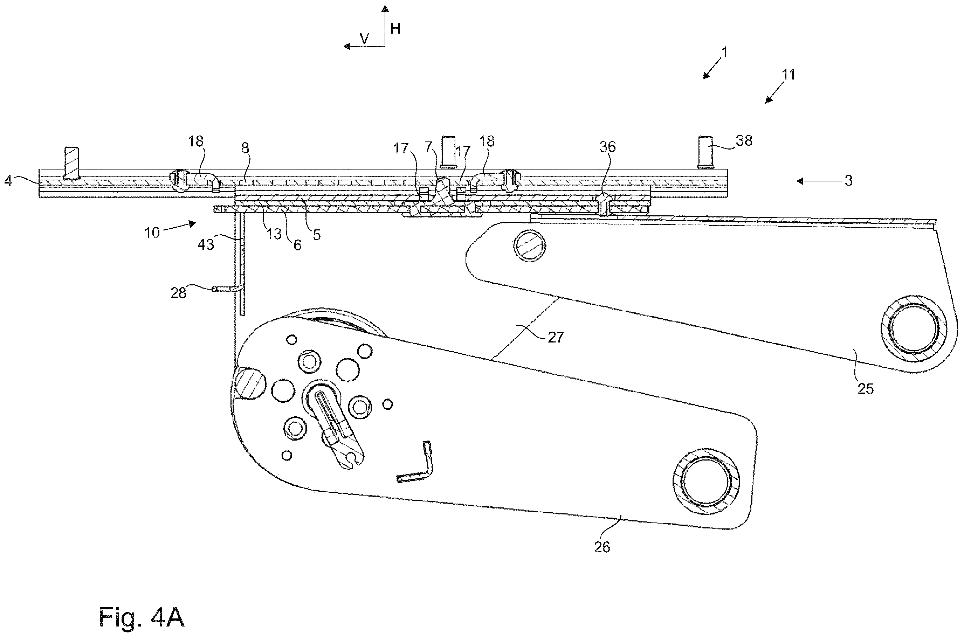

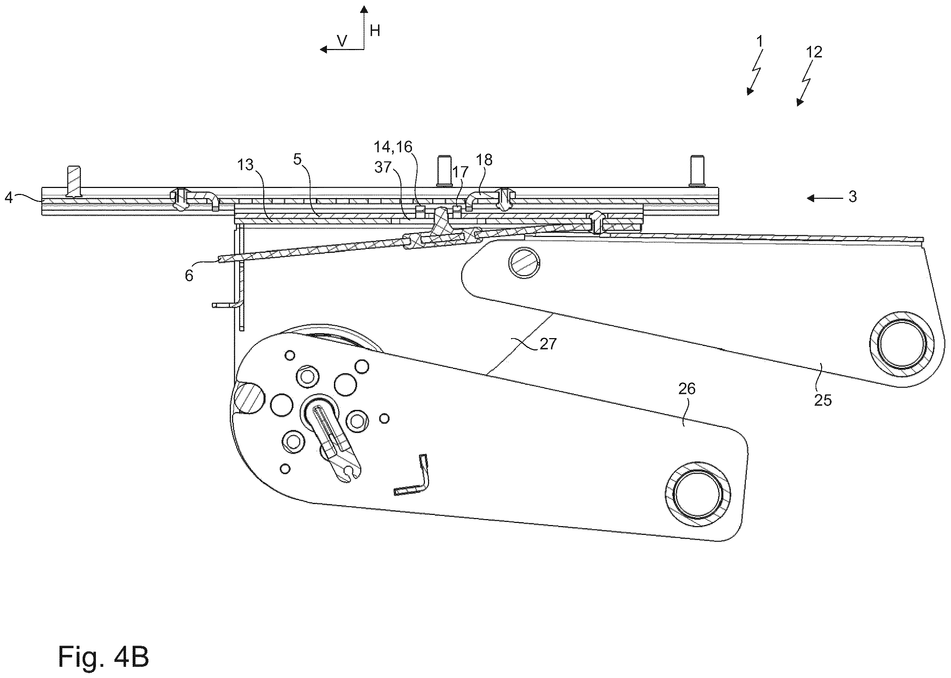

Die Figuren 4A und 4B zeigen die Führungsschieneneinrichtung 3 in einer anderen Stellung als die Figuren 3A und 3B, indem ein unteres Anschlagelement 17 mit einem oberen Anschlagelement 18 wechselwirkt und die erste Schiene 4 in Verstellrichtung V nach vorne verschoben ist. Ein Bowdenzug 15 ist hierbei nicht gezeigt.

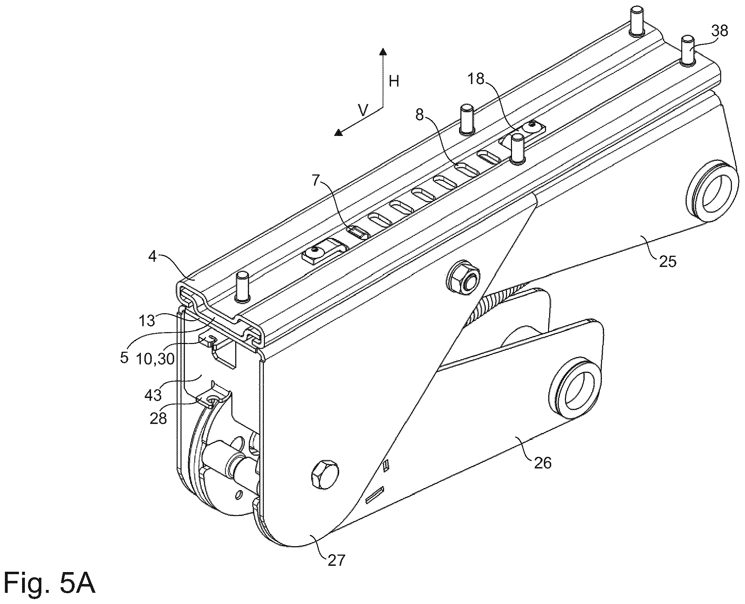

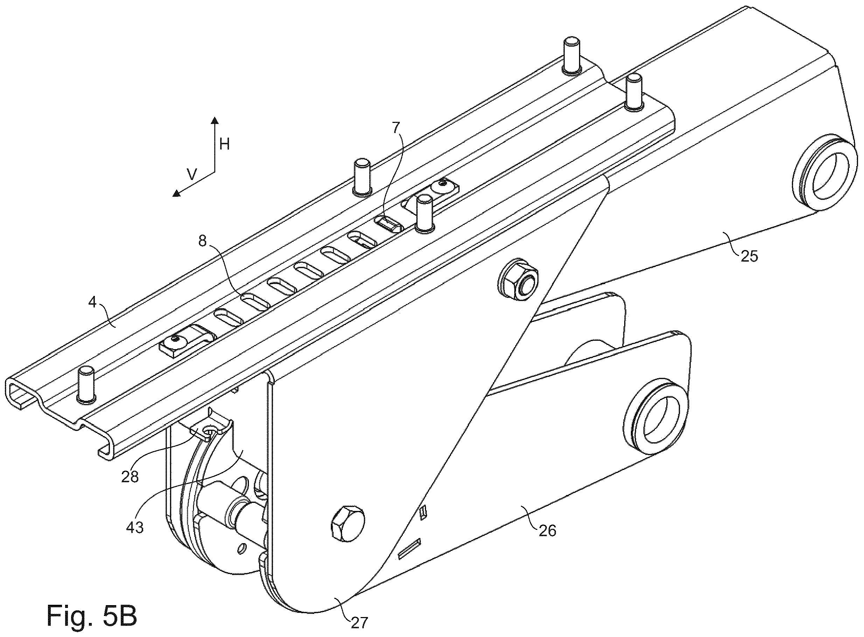

Die Figuren 5A und 5B zeigen die Armlehnenvorrichtung 1 jeweils in einer nicht-verschwenkten Stellung 11 und in einer perspektivischen Draufsicht. Die erste Schiene 4 in der Figur 5B ist gegenüber der zweiten Schiene 5 in Verstellrichtung V nach vorne verschoben. Wie aus den beiden Figuren zu erkennen ist, greift das Arretierungselement 7 in eine Ausnehmung 8 der ersten Schiene 4 ein, so dass die Verschiebebewegung der ersten Schiene 4 gegenüber der zweiten Schiene 5 arretiert ist.

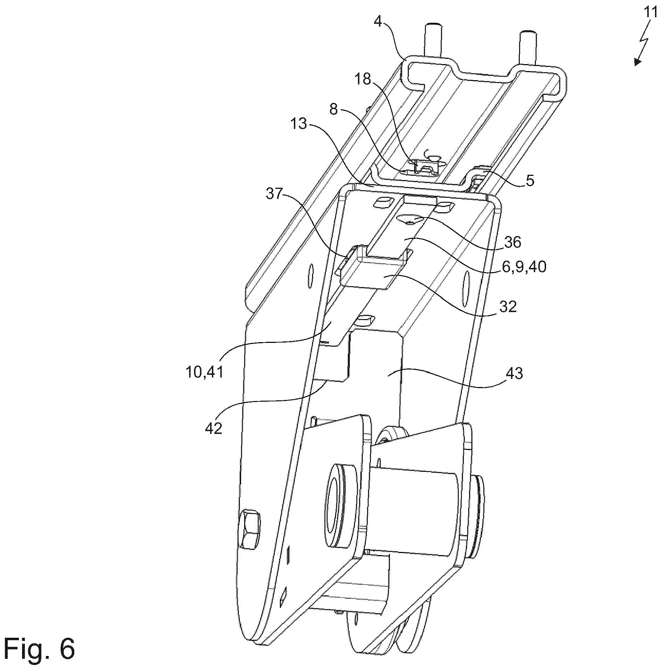

Die Figur 6 zeigt die Armlehnenvorrichtung 1 der Figur 5B in einer perspektivischen Unteransicht und die Arretierungsvorrichtung 6 in der nicht-ausgelenkten Stellung. Wie gut zu erkennen ist, weißt das Blechelement 43 eine dritte Aussparung 45 auf, so dass das zweite Ende 10 der Arretierungsvorrichtung 6 auslenkbar ist. Das Ende der dritten Aussparung dient als der Endanschlag 42.

### Bezugszeichenliste

- 1: Armlehnenvorrichtung
- 2: Fahrzeugsitz
- 3: Führungsschieneneinrichtung
- 4: erste Schiene
- 5: zweite Schiene
- 6: Arretierungsvorrichtung
- 7: Arretierungselement
- 8: Ausnehmung
- 9: erstes Ende der Arretierungsvorrichtung
- 10: zweites Ende der Arretierungsvorrichtung
- 11: nicht-ausgelenkte Stellung
- 12: ausgelenkte Stellung
- 13: obere Fläche
- 14: Aussparung
- 15: Bowdenzug
- 15': Betätigung Bowdenzug
- 16: Rand der Aussparung
- 17: unteres Anschlagelement
- 18: oberes Anschlagelement
- 19: erstes Ende des Arretierungselements
- 20: abfallende Fläche
- 21: Rückenlehne
- 22: Sitzteil
- 23: Sitzunterbau
- 24: Armlehnenbefestigung
- 25: erste Schwinge
- 26: zweite Schwinge
- 27: Armlehnenträger
- 28: Bowdenzugführung
- 29: Loch
- 30: Bowdenzugausnehmung
- 31: Federblech/Federstahl
- 32: Arretierungselementträger
- 33: Verbreiterungsabschnitt
- 34: Verbreiterungsfläche
- 35: Fase
- 36: Nietenverbindung
- 37: zweite Aussparung
- 38: Armlehnenteilverbindung
- 39: Tonnennippel
- 40: erstes Element
- 41: zweites Element
- 42: Endanschlag
- 43: Blechelement
- 44: vorderer Bereich der Armlehnenvorrichtung
- 45: dritte Aussparung
- V: Verstellrichtung
- H: Höhenrichtung
- B: Breitenrichtung

## Patentansprüche

1. Armlehnenvorrichtung (1), insbesondere für Nutzfahrzeugsitze (2), mit einer Führungsschieneneinrichtung (3) zum Führen einer Verschiebebewegung einer ersten Schiene (4) relativ zu einer mit der Armlehnenvorrichtung (1) verbindbaren zweiten Schiene (5) in einer Verstellrichtung (V), wobei die Verschiebebewegung der ersten Schiene (4) arretierbar ist durch ein Eingreifen eines Arretierungselementes (7) einer Arretierungsvorrichtung (6) in mindestens eine Ausnehmung (8) der ersten Schiene (4),
**dadurch gekennzeichnet, dass**
das Arretierungselement (7) mittels eines Arretierungselementträgers (32) mit der Arretierungsvorrichtung (6) verbunden ist und die Arretierungsvorrichtung (6) mit einem ersten Ende (9) starr mit der Armlehnenvorrichtung (1) verbunden und mit einem zweiten Ende (10) in einer Höhenrichtung (H) auslenkbar ist, wobei in einer nicht-ausgelenkten Stellung (11) der Arretierungsvorrichtung (6) das Arretierungselement (7) in die Ausnehmung (8) eingreift.

2. Armlehnenvorrichtung (1) nach Anspruch 1,
**dadurch gekennzeichnet, dass**
die Arretierungsvorrichtung (6) länglich ausgestaltet ist und sich in der Verstellrichtung (V) erstreckt.

3. Armlehnenvorrichtung (V) nach Anspruch 1 oder 2,
**dadurch gekennzeichnet, dass**
die Arretierungsvorrichtung (6) zumindest teilweise elastisch verformbar ausgestaltet ist.

4. Armlehnenvorrichtung (1) nach einem der vorangegangenen Ansprüche,
**dadurch gekennzeichnet, dass**
die Arretierungsvorrichtung (6) zumindest teilweise in Höhenrichtung (H) gesehen unterhalb der zweiten Schiene (5) angeordnet ist und zumindest die zweite Schiene (5) mindestens eine erste Aussparung (14) aufweist, durch welche das Arretierungselement (7) hindurchragt.

5. Armlehnenvorrichtung (1) nach einem der vorangegangenen Ansprüche,
**dadurch gekennzeichnet, dass**
ein Bowdenzug (15) mit dem zweiten Ende (10) der Arretierungsvorrichtung (6) verbindbar ist, um mittels einer Betätigung des Bowdenzugs (15) die Arretierungsvorrichtung (6) auszulenken.

6. Armlehnenvorrichtung (1) nach einem der vorangegangenen Ansprüche,
**dadurch gekennzeichnet, dass**
das Arretierungselement (6) sich im Wesentlichen in der Höhenrichtung (H) erstreckt.

7. Armlehnenvorrichtung (1) nach Anspruch 3,
**dadurch gekennzeichnet, dass**
die Arretierungsvorrichtung (6) zumindest teilweise aus einem Federblech (31) und/oder einem Federstahl (31) besteht.

8. Armlehnenvorrichtung (1) nach Anspruch 4,
**dadurch gekennzeichnet, dass**
an einem Rand (16) der ersten Aussparung (14) mindestens ein unteres Anschlagselement (17) der zweiten Schiene (5) angeordnet ist, welches mit mindestens einem oberen Anschlagselement (18) der ersten Schiene (4) wechselwirkt.

9. Armlehnenvorrichtung (1) nach einem der vorangegangenen Ansprüche,
**dadurch gekennzeichnet, dass**
das Arretierungselement (7) an einem ersten Ende (19) mindestens eine nach außen hin in Höhenrichtung (H) abfallende Fläche (20) aufweist.

## Claims

1. Armrest device (1), in particular for commercial vehicle seats (2), having a guide rail system (3) for guiding a displacement movement of a first rail (4) relative to a second rail (5) which can be connected to the armrest device (1), in a displacement direction (V), wherein the displacement movement of the first rail (4) can be arrested by the engagement of a locking element (7) of a locking device (6) in at least one recess (8) in the first rail (4),
**characterized in that**
the locking element (7) is connected to the locking device (6) by a locking element support (32) and the locking device (6) is rigidly connected to the armrest device (1) by a first end (9) and can be deflected in a height direction (H) by a second end (10), the locking element (7) engaging in the recess (8) in a non-deflected position (11) of the locking device (6).

2. Armrest device (1) according to claim 1,
**characterized in that**
the locking device (6) is of an elongate configuration and extends in the adjustment direction (V).

3. Armrest device (1) according to either claim 1 or claim 2,
**characterized in that**
the locking device (6) is configured to be elastically deformable at least in part.

4. Armrest device (1) according to any of the preceding claims,
**characterized in that**
the locking device (6) is arranged at least in part below the second rail (5), seen in the height direction (H), and at least the second rail (5) has at least one first opening (14), through which the locking element (7) projects.

5. Armrest device (1) according to any of the preceding claims,
**characterized in that**
a Bowden cable (15) can be connected to the second end (10) of the locking device (6) to deflect the locking device (6) by an actuation of the Bowden cable (15).

6. Armrest device (1) according to any of the preceding claims,
**characterized in that**
the locking element (6) extends substantially in the height direction (H).

7. Armrest device (1) according to claim 3,
**characterized in that**
the locking device (6) consists at least in part of a spring steel sheet (31) and/or of a spring steel (31).

8. Armrest device (1) according to claim 4,
**characterized in that**
arranged on an edge (16) of the first opening (14) is at least one lower stop element (17) of the second rail (5), which stop element interacts with at least one upper stop element (18) of the first rail (4).

9. Armrest device (1) according to any of the preceding claims,
**characterized in that**
the locking element (7) has on a first end (19) at least one surface (20) which slopes outwards in the height direction (H).

## Revendications

1. Dispositif accoudoir (1), en particulier pour des sièges de véhicules utilitaires (2), comportant un dispositif à rails de guidage (3) pour le guidage d'un mouvement de déplacement d'un premier rail (4) par rapport à un deuxième rail (5) apte à être relié au dispositif accoudoir (1) dans une direction de réglage (V), le mouvement de déplacement du premier rail (4) étant apte à être bloqué par un engagement d'un élément de blocage (7) d'un dispositif de blocage (6) dans au moins un évidement (8) du premier rail (4), **caractérisé par le fait que** l'élément de blocage (7) est relié au dispositif de blocage (6) au moyen d'un support d'élément de blocage (32) et le dispositif de blocage (6) est relié au dispositif accoudoir (1) de façon rigide par une première extrémité (9) et est apte à être dévié dans une direction de la hauteur (H) par une seconde extrémité (10), l'élément de blocage (7) s'engageant dans l'évidement (8) dans une position non déviée (11) du dispositif de blocage (6).

2. Dispositif accoudoir (1) selon la revendication 1, **caractérisé par le fait que**
le dispositif de blocage (6) est réalisé allongé et s'étend dans la direction de réglage (V).

3. Dispositif accoudoir (V) selon l'une des revendications 1 ou 2, **caractérisé par le fait que** le dispositif de blocage (6) est réalisé élastiquement déformable au moins en partie.

4. Dispositif accoudoir (1) selon l'une des revendications précédentes,
**caractérisé par le fait que** le dispositif de blocage (6) est disposé au moins en partie au-dessous du second rail (5), vu dans la direction de la hauteur (H), et au moins le second rail (5) présente au moins une première ouverture (14) à travers laquelle l'élément de verrouillage (7) fait saillie.

5. Dispositif accoudoir (1) selon l'une des revendications précédentes,
**caractérisé par le fait qu'**un câble Bowden (15) est apte à être relié à la seconde extrémité (10) du dispositif de blocage (6) pour dévier le dispositif de blocage (6) au moyen d'un actionnement du câble Bowden (15).

6. Dispositif accoudoir (1) selon l'une des revendications précédentes,
**caractérisé par le fait que** l'élément de blocage (6) s'étend sensiblement dans la direction de la hauteur (H).

7. Dispositif accoudoir (1) selon la revendication 3, **caractérisé par le fait que**
le dispositif de blocage (6) consiste au moins en partie en une tôle à ressort (31) et / ou un acier à ressort (31).

8. Dispositif accoudoir (1) selon la revendication 4, **caractérisé par le fait que**
sur un bord (16) de la première ouverture (14) est disposé au moins un élément d'arrêt inférieur (17) du second rail (5), lequel interagit avec au moins un élément d'arrêt supérieur (18) du premier rail (4).

9. Dispositif accoudoir (1) selon l'une des revendications précédentes, **caractérisé par le fait que** l'élément de blocage (7) présente sur une première extrémité (19) au moins une surface (20) en pente vers l'extérieur dans la direction de la hauteur (H).
